# EUROPÄISCHE PATENTANMELDUNG

(11) **EP 1 284 540 A2**
(43) Veröffentlichungstag der Anmeldung: **19.02.2003**
(21) Anmeldenummer: 02018048.5
(22) Anmeldetag: 13.08.2002
(51) Int. Cl.: H02P 6/14

(54) **Geschirrspüler-Pumpenantrieb**

(30) Priorität: 14.08.2001 DE 10139928
(71) Anmelder: Diehl AKO Stiftung & Co. KG, 88239 Wangen (DE)
(72) Erfinder: Zinke, Michael, 88239 Wangen im Allgäu (DE); Kaps, Werner, 88171 Weiler-Simmerberg (DE); Schlosser, Thomas, 88289 Waldburg (DE); Navarra, Pietro, 22077 Olgiate Comasco (CO) (IT); Greco, Bruno, 22077 Olgiate Comasco (CO) (IT)
(74) Vertreter: Stammler, Wolfgang (DE), Dipl.-Phys.

(57) **Zusammenfassung**

Geschirrspüler sind für ihren Pumpenantrieb üblicherweise aus Kostengründen nur mit einem ungeregelten, hinsichtlich der Dichtungserfordernisse allerdings anfälligen Asynchronmotor und mit einer einfachen Controller-Betriebsschaltung (13) zum Abarbeiten des Funktionsprogrammes ausgestattet, weil ein drehzahlsteuerbarer Antrieb die vom Markt vorgegebene Preisgrenze nicht einhalten könnte. Hinsichtlich des Wirkungsgrades, des Energiebedarfes und der Geräuschentwicklung wäre aber eine Drehzahlsteuerung sehr wünschenswert. Um ohne wesentliche Verteuerung einen Geschirrspüler mit verschleißarmem und drehzahlsteuerbarem Pumpenantrieb zu realisieren, ist der Einsatz eines Gleichstrommotors (11) mit Feldwicklungen (19) optimal, die über sensorgesteuerte Schaltstrecken (34) abwechselnd bestromt werden. Ein für die Polarität des als Naßläufer im Luftspalt gelagerten mehrpoligen permamentmagnetischen Rotors (17) empfindlicher Kommutator (18) gibt dabei vor, welche der Feldwicklungen (19) momentan zu durchfluten ist. Brummerscheinungen aufgrund der Restwelligkeit der Feldgleichspannung lassen sich durch Überlagerung einer zum Amplitudenverlauf gegenläufigen Modulation der Impulsbreiten kompensieren. Eine solche Kompensation erübrigt sich aber, wenn über den Controller (14) keine reine Drehzahlregelung erfolgt, sondern eine unterlagerte Stromregelung für Betrieb mit konstantem Drehmoment bei der vorgegebenen Drehzahl. Diese Zusatzschaltung (20) für die Ansteuerung der Feldwicklungen (19) wird zweckmäßigerweise unmittelbar an den Motor (11) adaptiert und ihrerseits im wesentlichen über die bisherigen Schnittstellen aus der praktisch unverändert bleibenden Betriebsschaltung (13) angesteuert.

## Beschreibung

Die Erfindung betrifft einen Geschirrspüler-Pumpenantrieb gemäß dem Oberbegriff des Anspruches 1.

Typisch für die Ausstattung eines Geschirrspülers ist ein einphasiger Asynchronmotor als Antrieb für seine Umwälzpumpe, der zur Drehfelderzeugung über einen Kondensator einen Spannungsverlauf in einer zweiten Phasenlage generiert (vgl. EP 1 075 080 A2) und dessen Drehzahl mit der Folge wechselnder Geräuschemission lastabhängig schwankt. Konstruktiv von Nachteil ist bei solchem Antrieb das Erfordernis einer Dichtung zwischen Motor und Pumpe, die dort auf Reibung beansprucht wird, weshalb sie verschleißanfällig und deshalb Quelle von zusätzlichen, in Spektrum und Intensität nicht konstanten Störgeräuschen ist.

Konstruktiv vorteilhafter als Pumpenantrieb wäre ein Synchronmotor; nämlich aufgrund seines breiten zulässigen Luftspalts zwischen Stator und Rotor, in den ein zur Wasserseite hin offener Kunststofftopf eingesetzt werden könnte, in dem dann der Rotor als Naßläufer gelagert wäre. Damit wären verschleißanfällige und geräuschträchtige Dichtungsmaßnahmen zwischen Motor und Pumpe vermieden. Solch ein Motor kann aber schon aufgrund seines Masseträgheitsmomentes und erst Recht unter Last nicht selbsttätig anlaufen, er benötigt eine aufwendige elektronische Hochfahrsteuerung in den netzsynchronen Lauf hinein. Ferner ist für den sicheren Anlauf eine Unsymmetrie des Feldes erforderlich, nämlich ein in Umfangsrichtung nicht konstanter Luftspalt. Daraus resultiert ein im Umlauf schwankendes Drehmoment, das im Betrieb zu unangenehmer Geräuschbelästigung führt. Deshalb hat dieser Antrieb am Markt keine Bedeutung erlangt.

Eine wünschenswerte Anfahrsteuerung für sanften und dadurch geräuscharmen Betrieb oder für Optimierung der Geschwindigkeit auf unterschiedliche, energieoptimierte Waschprogramme wäre mit mehrphasigen symmetrischen Synchronmotoren möglich, die aber ebenfalls für ihren Betrieb aufwendige elektronische Steuerschaltungen benötigen, deren Einsatz sich bei Geschirrspülmaschinen aus Kostengründen verbietet.

Um von der Konkurrenzsituation am Markt vorgegebene Kostenpunkte halten zu können, begnügt man sich deshalb in der Praxis mit ungeregelten Asynchronmotoren als Antrieben in Geschirrspülern und muß dann die Geräuschentwicklung hinnehmen, wie sie typischerweise etwa beim Einschalten des Pumpenmotors, aufgrund des Dampfstosses beim Wechsel zwischen Heißwasser- und Kaltwasserbehandlung oder nach dem Abpumpen des Wassers beim Leerlaufen der Pumpe auftritt.

Der Erfindung liegt die Aufgabe zugrunde, als Ersatz für den preisgünstigen Asynchronantrieb einen Geschirrspüler-Pumpenantrieb zu schaffen, der die konstruktiven Vorteile eines Naßläufers aufweist und zur Optimierung des Motorbetriebes in elektrischer wie akustischer Hinsicht bedarfsweise auch noch eine preiswerte Drehzahlbeeinflussung ermöglicht; der also trotz großen Luftspalts zwischen Stator und Rotor mit gutem Wirkungsgrad über einen breiten Drehzahlbereich geräuscharm betrieben werden kann, ohne durch die dafür erforderliche aufwendigere Schaltung den bisherigen Preispunkt aufgeben zu müssen.

Diese Aufgabe ist erfindungsgemäß durch die Kombination der im Hauptanspruch angegebenen wesentlichen Merkmale gelöst. Danach wird als Pumpenantrieb ein Gleichstrommotor mit permanentmagnetischem Rotor eingesetzt, der auch bei vergleichbar großem Luftspalt noch mit gutem Wirkungsgrad betrieben werden kann und eine sensorgesteuerte elektronische Kommutierung mit besonders einfachen Schaltungsmitteln ermöglicht. Darüber hinaus kann nun sogar für eine zusätzliche Drehzahlsteuerung auf die vorhandene da standardisiert eingeführte Betriebsschaltung für einen Geschirrspüler zurückgegriffen werden, die bisher noch keine Drehzahlsteuerung des Pumpenmotors erlaubt.

Für diesen Betrieb wird gemäß einer Weiterbildung der Erfindung das Motorgehäuse mit einer Zusatzschaltung zum Anschluß an die herkömmliche Betriebsschaltung bestückt. Eine gegenüber der Wiederholfrequenz der Kommutatorsignale hochfrequente, aus dem Prozessor der Betriebsschaltung ableitbare Impulsfolge mit nun variablem Tastverhältnis oder variabler Frequenz schaltet den Feldstromkreis ohne das Erfordernis, dafür die aufwendigeren herkömmlichen Halbbrückenschaltungen realisieren zu müssen, und bewirkt so über bloße Umschalter eine nach Art einer Choppersteuerung (Prinzip des Tiefsetzstellers) eine variable mittlere Motorspannung zur Beeinflussung der Drehzahl des Pumpenmotors.

Noch vorteilhafter als eine direkte Drehzahlsteuerung ist die indirekte Drehzahlbeeinflussung über den mittleren Motorstrom. Denn eine Regelung auf konstanten Motorstrom gemäß dieser Weiterbildung der erfindungsgemäßen Lösung ist unmittelbar von Einfluß auf das Drehmoment und führt somit über konstantes Drehmoment zu einem besonders ruhigen Lauf des elektronisch kommutierenden Gleichstrommotors.

Bezüglich Einzelheiten und zweckmäßiger Weiterbildungen zur erfindungsgemäßen Lösung und deren Vorteilen wird außer auf die weiteren Ansprüche auch auf nachstehende Beschreibung von in der Zeichnung unter Beschränkung auf das Wesentliche blockschaltmäßig skizzierten bevorzugten Realisierungsbeispielen zur Erfindung Bezug genommen. In der Zeichnung zeigt:
- Fig. 1: eine erfindungsgemäße Zusatzschaltung, hinter der herkömmlichen Geschirrspüler-Betriebsschaltung, zur Drehzahlsteuerung eines in diesem Falle zweiphasigen Gleichstrommotors als dem Pumpenmotor,
- Fig. 2: eine gegenüber Fig. 1 abgewandelte Zusatzschaltung,
- Fig. 3: ein Impulsdiagramm zur Erläuterung der prinzipiellen Funktion der beiden Zusatzschaltungen nach Fig.1 oder Fig.2 und
- Fig. 4: ein Schaltbild für eine gegenüber Fig.1 und Fig.2 abgewandelte Auslegung der erfindungsgemäßen Pumpenmotor-Steuerung.

Der im Sumpf eines Geschirrspülers angeordnete Pumpenmotor 11 wird aus dem Haushaltsnetz 12 über eine Betriebsschaltung 13 bestromt, die aus Kostengründen nur eine Einschalt-Ausschalt-Funktion für den Pumpenbetrieb nach Maßgabe des Ablaufes eines in einem Mikrocontroller 14 vorgegebenen, zeit- und sensorgesteuerten Spülprogrammes realisiert. Ein bei der Betriebsschaltung 13 vorhandener Gleichrichter 15 speist einen elektronischen Spannungswandler 15a, der eine Kleinsignalspannung 16 insbesondere für den Betrieb des Mikrocontrollers 14 sowie daran etwa angeschlossener aktiver Sensoren zur Steuerung des Programmablaufes des Geschirrspülers liefert.

Um die eingangs erläuterte Antriebskonstruktion mit naßlaufend gelagertem Rotor realisieren und die bisher eingesetzte Betriebsschaltung 13 möglichst beibehalten aber doch eine Drehzahlsteuerung des Pumpenantriebs ermöglichen zu können, ist als Pumpenmotor 11, der den hinreichend breiten Luftspalt zum Einsatz des Naßläufer-Topfes zwischen Stator und Rotor erlaubt, ein Gleichspannungsmotor mit Permanentmagnet-Rotor 17 und mit Sensor-Kommutator 18 zur rotorstellungsabhängigen Umpolung der Durchflutung der Feldwicklung 19 gewählt. Deren Feldstromkreis 30 kann aus dem auf der Platine der Betriebsschaltung 13 ohnehin vorhandenen Gleichrichter 15 gespeist werden, was Zusatzkosten für den Betrieb des Gleichstrommotors aus dem Wechselspannungsnetz erübrigt.

Da also die Gleichspannung für den Feldstromkreis 30 des Pumpenmotors 11 aus der Betriebsschaltung 13 abgezweigt wird, die ihrerseits aber aus Kostengründen regelmäßig hinter einem Einweg-Gleichrichter 15 nur mit einem Glättungskondensator endlicher Größe ausgestattet ist, führt die Motor-Gleichspannung einen überlagerten, in seiner Intensität lastabhängigen Netzbrumm, der den Feldgleichstrom entsprechend schwanken läßt. Das führt bei der Durchflutung der Feldwicklungen zu einer physiologisch störenden elektrodynamischen Geräuschentwicklung. Die läßt sich jedoch gemäß einem weiteren Aspekt vorliegender Erfindung, dem auch eigenständige Schutzwürdigkeit beigemessen wird, überraschend einfach beherrschen, worauf unten noch näher eingegangen wird.

Direkt auf das Gehäuse des Motors 11 ist mit ganz wenigen Schnittstellen eine Zusatzschaltung 20 für eine Drehzahlsteuerung des Pumpenmotors 11 adaptiert. Die Betriebsschaltung 13 ist nun vorzugsweise nicht mehr direkt sondern wie aus der Zeichnung ersichtlich über diese Zusatzschaltung 20 auf den Motor 11 geschaltet. Die Stromversorgung auch für die aktiven Schaltungskomponenten der Zusatzschaltung 20 erfolgt aus dem schon erwähnten, auf der Platine der Betriebsschaltung 13 für die interne Kleinspannungs-Versorgung ohnehin vorhandenen Spannungswandler 15a.

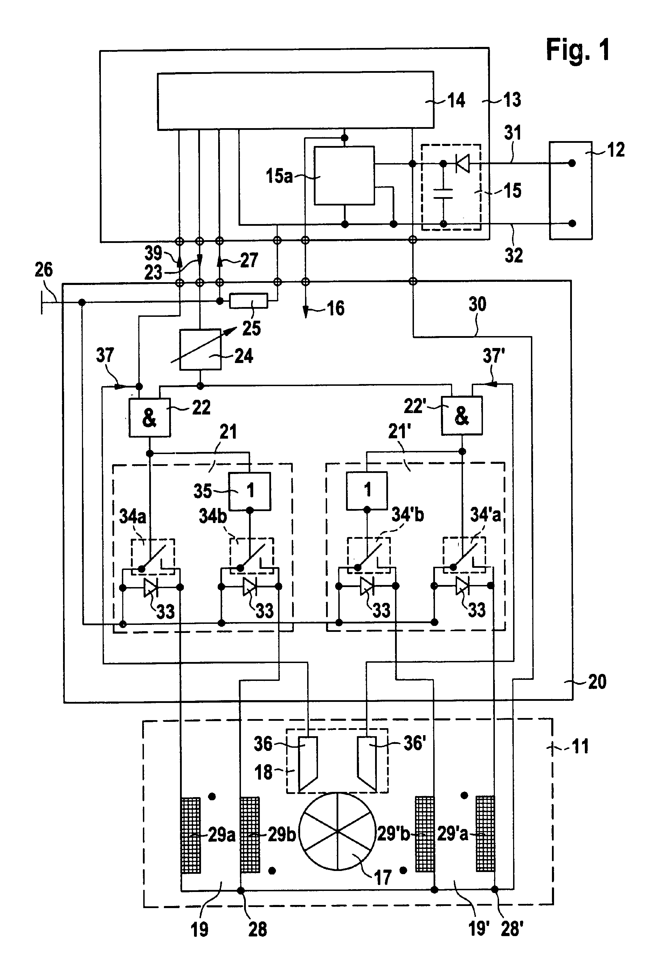

Die Zusatzschaltung 20 weist im Falle des Realisierungsbeispiels nach Fig.1 - mit gegensinnig gewickelten Feld-Teilspulen 29a,b am Motor 11- Umschalter 21 für den Polaritätswechsel der Durchflutung der Feldwicklungen 19 in Abhängigkeit davon auf, welche magnetische Polarität aufgrund der momentanen Drehwinkelstellung des mehrpolig permanentmagnetischen Rotors 17 vom Kommutator 18 durch sein Sensorsignal 37 gemeldet wird. Dieses Signal 37 wird im vorliegenden Beispielsfalle ausgelöst, indem der Sensor 36 im Zuge der drehenden Vorbeibewegung eines der Dipole des Rotors 17 die Annäherung einer vorgegebenen magnetischen Polarität feststellt. Mit seinem Signal 37 gibt der Kommutator 18 bei für die Drehmomentenerzeugung zutreffender Stellung des Rotors 17 eine mit dem Stromkreis 30 über die Feldwicklung 19 in Serie liegende UND-Bedingung 22 frei.

Deren zweites UND-Kriterium ist eine gegenüber der Wiederholfrequenz des Signales 37 hochfrequente Impulsfolge 23. Die wird mit einer vorzugsweise oberhalb hörbarer Frequenzen gelegenen Pulsfolgefrequenz von mindestens ca. 16 kHz aus der internen Taktung im Mikrocontroller 14 abgeleitet. Für eine Drehzahlsteuerung des Gleichstrommotors 11 ist diese Pulsfolgefrequenz nun in ihrem Tastverhältnis veränderbar, was in der Zeichnung durch ein auf der Zusatzschaltung 20 dargestelltes Stellglied 24 symbolisiert ist.

Insoweit eine manuelle Eingriffsmöglichkeit auf das Stellglied 24 erforderlich ist, wird man allerdings (entgegen der Prinzipdarstellung in der Zeichnung) für die Belange der Praxis die Funktion des Stellgliedes 24 nicht auf der Platine 20 am schlecht zugänglichen Motor 11 realisieren, sondern auf der hinter der Bedienblende des Geschirrspülers eingebauten Platine der Betriebsschaltung 13 und dort bevorzugt softwaremäßig in dem Prozessor 14, auf den die externen Steuerungsvorgaben einwirken und der den Ablauf des Arbeitsprogrammes steuert.

Jedenfalls kann über das Tastverhältnis in der, die Feldwicklung 19 über die Schalter 21 umschaltenden, Impulsfolge die nach Art der Funktion eines Tiefsetzstellers herabgesetzt wirksame mittlere Feldspannung variiert und damit die momentane, an sich lastabhängige Drehzahl des Rotors 17 beeinflußt werden.

Im Sinne der oben erwähnten Geräuschunterdrückung ist es zweckmäßig, wenn der Controller 14 auf der Betriebsschaltung 13 über einen Analogeingang den zeitlichen Amplitudenverlauf der nur wenig geglätteten Feldspannung am Ausgang des Netzgleichrichters 15 erfaßt und damit - also unabhängig von der quasistationären Vorgabe zur Drehzahlsteuerung - über das Tastverhältnis die Impulsbreite umgekehrt proportional zur momentanen Amplitude geringfügig beeinflußt. Denn das kompensiert den Einfluß der schwankenden Netzgleichspannung auf die elektrodynamische Geräuscherzeugung im Stator und unterdrückt so ohne besonderen Schaltungsmehraufwand sehr wirksam die schon beschriebene, an sich störende elektroakustische Wirkung des Restbrumm im Feldstromkreis 30.

Eine im Schaltbild Fig.1 berücksichtigte zusätzliche Aufschaltung des Kommutators 18 liefert an den Mikrocontroller 14 mit der Wiederholfrequenz der Signalfolge 37 eine Drehzahlrückmeldung, die im Controller 14 etwa für Anzeige- und Kontrollfunktionen und insbesondere für einen Soll-Ist-Vergleich zur Drehzahlregelung ausgewertet werden kann; aber auch für eine adaptive Programmgestaltung etwa in Abhängigkeit von der hydraulischen Pumpenleistung, z.B. wenn nach dem Abpumpen des Wassers das Ansaugen von Luft seine signifikante Drehzahländerung liefert.

Wenn, wie ebenfalls in Fig.1 der Zeichnung berücksichtigt, eine der beiden vom Haushaltsnetz 12 kommenden Versorgungsleitungen 31, 32, vorzugsweise deren Nulleiter 32, in der Betriebsschaltung 13 unterbrochen wird, um diesen über einen Strommeßwiderstand 25 zur Erdung 26 für die Zusatzschaltung 20 zu schleifen, lassen sich aus der daran lastabhängig abfallenden Meßspannung 27 im Mikrocontroller 14 Informationen über das aktuelle Betriebsverhalten des Motors 11 für weitere Überwachungs- und Regelungsaufgaben gewinnen. So ist ein signifikanter Anstieg des Spannungsabfalles infolge überhöhten Motorstromes ein Indiz für eine drohende Überhitzung oder sogar mechanische Blockierung des Pumpenantriebes, die im Controller 14 erkannt und zu zumindest vorübergehender Drosselung der Leistung des Motors 11 oder vorsorglich gänzlich zu dessen Abschalten führt, ohne für solche Schutzmaßnahmen eigens thermisch reagierende Motorschutzschalter einsetzen zu müssen. Der Systematik wegen ist auch dieser Meßwiderstand 25 in der Zeichnung auf der Platine der Zusatzschaltung 20 dargestellt, obgleich er sich in der Praxis problemlos direkt bei der Trennstelle des Nulleiters 32 auf der Platine der Steuerschaltung 13 unterbringen läßt.

Die rotorstellungsabhängige Steuerung der Durchflutung in der Feldwicklung 19 kann grundsätzlich in aus der Wechselrichterschaltungstechnik bekannter Weise über Halbbrückenschaltungen jeweils aus der Reihenschaltung zweier gegensinnig gesteuerter Schalter mit an deren Mittenabgriff massefrei schwankendem Potential für das periodische Umpolen der Durchflutung der Feldwicklung 19 erfolgen. Hinsichtlich des Potentials überschaubarere Verhältnisse (wegen Bezugs auf ein gemeinsames Massepotential) bei weniger aufwendiger Schaltersteuerung (infolge nur noch der halben Anzahl an anzusteuernden einzelnen Schaltstrecken 34) ergeben sich jedoch, wenn wie zeichnerisch in Fig.1 berücksichtigt beim Gleichstrommotor 11 wenigstens eine zweiteilige Feldspule 19 mit Mittenabgriff 28 zwischen ihren beiden gegensinnig gewickelten Teilspulen 29 (29a, 29b) vorgesehen wird. Für die Feldumpolung genügt es nun, diese beiden gegensinnig in Serie geschalteten Teilspulen 29 ihrem Mittenabgriff 28 gegenüber mittels eines bloßen Umschalters 21 abwechselnd - entweder die eine 29a oder die andere 29b - und deshalb mit zueinander gegensinnigen Durchflutungsrichtungen in den Feldstromkreis 30 vom Phasenanschluß an den Netzgleichrichter 15 zur Erdung 26 seines Netznulleiters 32 einzuschalten. Die beiden Teilspulen 29a,b wirken also auf den Luftspalt zum mehrpolig permamentmagnetischen Rotor 17 wie zwei gegensinnig gepolte Feldspulen 19=29a+29b, was in der Zeichnung durch die Zuordnung von Punkten für den Wickelsinn verdeutlicht ist. Deshalb können die beiden Teilspulen 29a,b zur Feldwicklung 19 herstellerseitig einfach als bifilare Wicklung 29 aufgebracht werden, an welcher dann den Anschlüssen des Umschalters 21 gegenüber der Mittenabgriff 28 freigelegt und an den Feldstromkreis 30 geschaltet wird.

Abgesehen von dem fertigungstechnischen Vorteil der Erstellung beider Feldspulen 29a-29b in einem Wickelvorgang weist die bifilare Wicklung 29=29a-29b auch den Vorteil auf, daß infolge geringer Streuinduktivität eine maximale induktive Kopplung zwischen den beiden Teilspulen 29a-29b besteht. Das reduziert den im Schaltbetrieb auftretenden induktiven Abschaltstrom über die in den Durchbruch getriebene Halbleiter-Schaltstrecken 34 der Umschalter 21 bzw. über deren Freilaufdioden 33 auf einen betriebstechnisch unkritischen Wert. Denn je kleiner die Streuinduktivität, desto kleiner ist die in ihr gespeicherte Energie. Die im Motorfeld gespeicherte Energie wird durch die zweite der Teil-Feldspulen 29a,b und deren nun in Durchlaßrichtung betriebenen Freilaufdiode 33 aufrechterhalten, da nach der Lenzschen Regel der Energieerhaltung der Strom durch die gerade abzuschaltende der beiden Teilspulen 29a,b in der bisherigen Richtung weitergetrieben wird. Statt Schaltstrecken 34 mit zusätzlichen avalanche-festen Freilaufdioden 33 können auch avalanchefeste MOS-Feldeffekttransistoren als Schaltstrecken 34 dienen. Das sind Alternativen, welche die Kosten der Zusatzschaltung 20 weiter verringern.

Die eine der beiden Schaltstrecken 34a jeden Umschalters 21, 21' wird über den Kommutator 18 direkt und die andere 34b über einen Inverter 35 angesteuert, so daß immer nur eine der beiden Strecken 34a, 34b geschlossen und somit nur eine der beiden Teilspulen 29a, 29b in Fig.1 durchflutet ist. Dadurch ist sichergestellt, daß immer die für die Drehmomentenbildung gerade zutreffende elektromagnetische Polarität im Stator mit der Momentanstellung des permanentmagnetischen Rotors 17 zusammenwirkt.

Im Blockschaltbild Fig.1 ist ferner berücksichtigt, daß es im Interesse ruhigen Laufes und hohen elektromechanischen Wirkungsgrades zweckmäßig ist, als Pumpenmotor 11 den Gleichstrommotor zweiphasig auszustatten, also der bisher betrachteten Feldwicklung 19, dieser bezüglich des Rotors 17 gegenüber, eine zweite (gleichartig bifilar gewickelte) Feldwicklung 19' elektrisch um 90° phasenverschoben parallel zu schalten. Dabei ist es für eindeutiges Schaltverhalten zweckmäßig, den Kommutator 18 durch zwei elektrisch um 90° phasenverschoben ansprechende Magnetfeldsensoren 36, 36' (etwa wieder Hall-Sensoren) zu realisieren, die über deren Umschalter 21-21' jeder einer der beiden Feldwicklungen 19-19' zugeordnet sind. Die Sensoren 36, 36' sind derart an der Schaltungsplatine für die Zusatzschaltung 20 befestigt, daß sie bei deren Applikation auf den Motor 11 durch Öffnungen in dessen Gehäuse hineinragen, um das von der momentanen Rotorstellung abhängige aktuelle Magnetfeld zu erfassen und so polaritätsabhängig über die Umschalter 21, 21' die zur Drehmomentenerzeugung jeweils phasenrichtige Durchflutung der Feldwicklungen 19, 19' des Stators aufzusteuern.

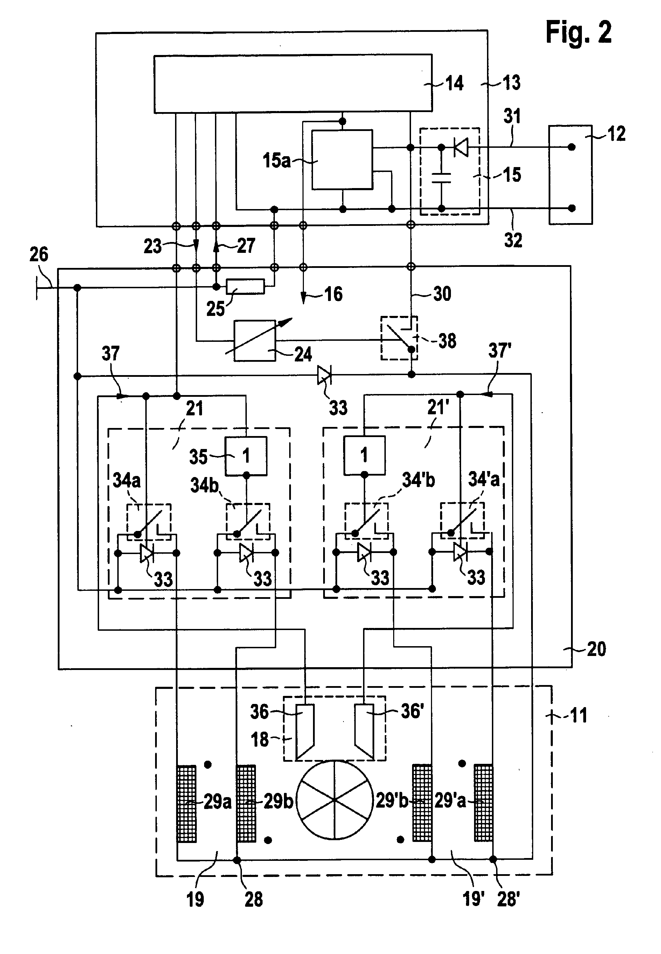

Die für die Drehzahlsteuerung mittels der wirksamen Motorspannung im Feldstromkreis 30 realisierten UND-Bedingungen 22, 22' aus den Sensorsignalen 37, 37' für die Durchflutungsrichtung und der in ihrem Tastverhältnis variierbaren Impulsfolge 23 für den pulsbreiten-modulierten Feldstrom, die dafür in der Schaltungsvariante nach Fig. 1 auf ein Koinzidenzgatter "&" je Feldwicklung 19, 19' zusammengeschaltet sind, können auch dezentral realisiert werden. Dafür erfolgt gemäß der Schaltungsvariante nach Fig. 2 die Steuerung der Umschalter 21, 21' direkt mit den Sensorsignalen 37 bzw. 37' relativ langer Schaltdauer (vgl.

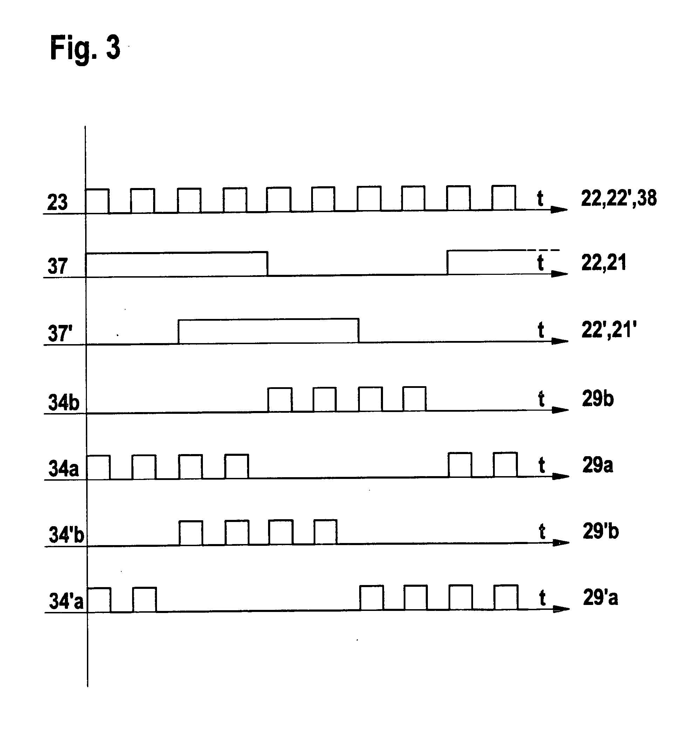

Fig.3); während die zweite Kondition der UND-Bedingung 22 bzw. 22' hier nicht durch ein Koinzidenzgatter vor den Umschaltern 21, 21' realisiert wird, sondern durch einen rückstromentkoppelten Serienschalter 38 unmittelbar im Feldstromkreis 30, etwa gleich hinter der Einspeisung aus dem Hochspannungs-Gleichrichter 15 von der Betriebsschaltung 13 in die Zusatzschaltung 20, wie in Fig. 2 oben rechts dargestellt. Am Betriebsverhalten des drehzahlveränderbaren Pumpenmotors 11 ändert diese abgewandelte Realisierung der UND-Bedingung 22 bzw. 22' in Form der Überlagerung der hochfrequenten Impulsfolge 23 und der dagegen niederfrequenten Folge der Sensorsignale 37 nichts, wie sich aus den in Fig. 3 dargestellten Abhängigkeiten ergibt.

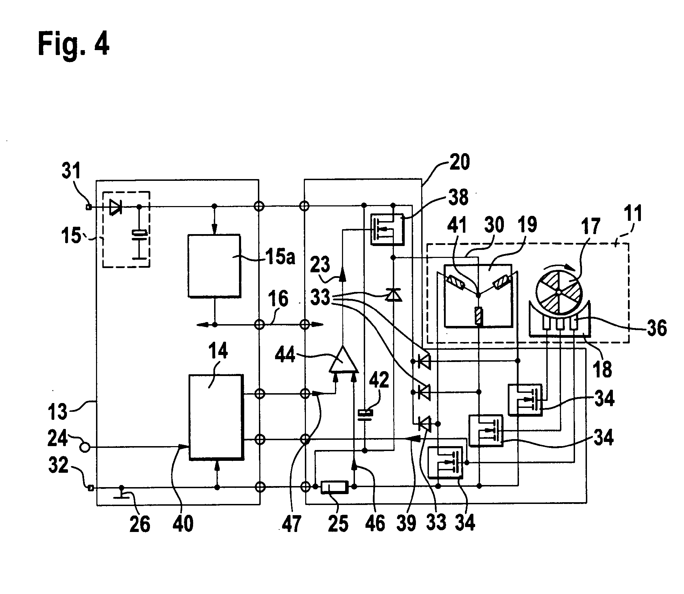

Eine noch geringere Geräuschentwicklung liefert die erfindungsgemäße Weiterbildung nach Fig.4. Hier ist für den Pumpenantrieb ein Gleichstrommotor 11 mit erheblich verbessertem Rundlaufverhalten aufgrund dreier (in diesem Beispiel unifilarer) Feldwicklungen 19 für einen Rotor 17 mit winkelmäßig gegeneinander verschwenkten permanentmagnetischen Polpaaren vorgesehen, und die Drehzahlregelung erfolgt über einen unterlagerten Feldstromregelkreis. Da dieser für die gerade vorgegebene Drehzahl über den Motorstrom unmittelbar auf das Drehmoment einwirkt und somit lastabhängige Drehzahlschwankungen auf konstantes Drehmoment ausregelt, ergibt sich ein derart ruhiger Lauf unter allen Betriebsgegebenheiten, daß die oben beschriebene, von der Welligkeit hinter dem Gleichrichter 15 abhängige Gegensteuerung nun gar nicht mehr erforderlich ist.

Für den Fall einer vergleichsweise langen Versorgungsleitung 31/32 zwischen der Betriebsschaltung 13 und der Zusatzschaltung 20 ist letztere zweckmäßigerweise eingangsseitig mit einem Stützkondensator 42 hoher Kapazität, etwa wie skizziert mit einem Elektrolytkondensator ausgestattet, um den aus dem Einweg-Gleichrichter 15 gespeisten Feldstromkreis 30 zu stabilisieren. Die drei Stränge der Feldwicklung 19 sind über einen gemeinsamen Sternpunkt 41 wieder in den Feldstromkreis 30 mit seinem Tiefsetz-Schalter 38 für die Stromtaktung geschaltet. Freilaufdioden 33 überbrücken wieder jeweils den Schalter 38 zum vom Sternpunkt 41 abgelegenen Ende des jeweiligen Stranges der Feldwicklung 19. Jenes Wicklungsende wird (vgl. auch insoweit die Übereinstimung mit der Schaltung nach Fig.1/2) über eine vom Kommutator 18 sensorgesteuerte MOS-FET-Schaltstrecke 34 auf die Erdung 26 gelegt, um den Feldstromkreis 30 rotorstellungsabhängig über den jeweiligen Strang der Wicklung 19 vorübergehend zu schließen.

Am Strommesswiderstand 25 vor der Erdung 26 des Feldstromkreises 30 wird nun ein Stromistwert 46 abgegriffen und auf einen hysteresebehafteten Komparator 44 geschaltet, dessen Vergleichseingang aus dem Controller 14 mit einem Stromsollwert 47 beaufschlagt ist. Außerdem wird von einem der Sensoren 36 ein Drehzahlistwert 39 abgegriffen, der im Controller 14 mit einer externen Drehzahlvorgabe 40 verglichen wird. Die daraus resultierende momentane Drehzahlabweichung wird im Controller 14 aufgrund des bekanten Betriebsverhaltens des Motors 11 in den auf den Komparator 44 geschalteten Stromsollwert 47 umgesetzt. Dessen Schalthysterese bestimmt für die gerade gegebene Stromabweichung die Pulsfolgefrequenz und deren Tastverhältnis am Tiefsetzschalter 38. So wird der Motorstrom erhöht, bis die vorgegebene Drehzahl erreicht ist, und dann der Motorstromkreis 30 über das aktuelle Tastverhältnis des Tiefsetzschalters 38 auf den konstanten Strom für die vorgegebenen Drehzahl geregelt. Das erbringt eine zusätzliche Förderung des ruhigen Rundlaufes wegen konstanten Drehmomentes; aber auch deshalb, weil der sonst aus einer zwangsläufigen Überlappung bei der Kommutierung zwischen den einzelnen Strängen der Feldwicklung 19 resultierende kurzzeitig kräftige Stromanstieg (mit der Folge elektromagnetischer Geräuscherzeugung im Statorblechpaket des Motors 11) durch die schnelle Stromregelung nun unterbunden wird.

Der Controller 14 muß nicht unbedingt nur auf der externen Betriebsschaltung 13 verwirklicht sein; für einen autark einsetzbaren Motor 11 sind (insoweit abweichend von Fig. 4) jedenfalls die Funktionen der überlagerten Drehzahl- und Stromregelkreise zweckmäßigerweise in einem eigenen Prozessor (entsprechend dem Controller 14) zusammengefaßt, der zusammen mit der Feldstromumsteuerung auf der Zusatzschaltung 20 direkt am Motor 11 untergebracht ist.

Um also Geschirrspüler, die aus Kostengründen herkömmlicherweise mit einem reibend abgedichteten Pumpenantrieb und für dessen Betrieb nur mit einer einfachen Controller-Betriebsschaltung 13 zum Abarbeiten des Funktionsprogrammes aber insbesondere ohne Möglichkeiten einer Drehzahlbeeinflussung ausgestattet sind, ohne wesentliche Verteuerung mit einem verschleißarmen und drehzahlsteuerbaren Pumpenantrieb zu realisieren, ist der Einsatz eines Gleichstrommotors 11 optimal, dessen Feldwicklungen 19 abwechselnd über sensorgesteuerte Schaltstrecken 34 über einen Strommesswiderstand 25 gegen Masse bestromt werden. Ein dafür auf die Polarität des mehrpolig permamentmagnetischen Rotors 17 ansprechender Kommutator 18 gibt vor, welche der Feldwicklungen 19 momentan zu durchfluten ist. Eine z.B. direkt aus dem Prozessor 14 der Betriebsschaltung 13 abgeleitete oder drehzahlabhängig über einen hysteresebehafteten Stromkomparator 44 und deshalb mit variabler Pulsfolgefrequenz und variablem Tastverhältnis gewonnene Impulsfolge 23 bestimmt Feldspannung bzw. Motorstrom und somit Drehzahl bzw. Drehmoment des Motors 11. Eine bei direkter Drehzahlregelung zweckmäßige Kompensation des Netzbrumm im Feldstromkreis 30 durch gegensteuernde, vom Netzbrumm modulierte Impulsbreite erübrigt sich bei einer Drehzahlbeeinflussung über eine untergeordnete Stromregelung auf konstantes Drehmoment bei der vorgegebenen Drehzahl. Damit lassen sich hohe Anlaufmomente erreichen, weil die Durchflutung über den Nominalwert hinaus vorübergehend gezielt bis in die magnetische Sättigung getrieben werden kann; aber wahlweise ist auch ein Betrieb mit minimaler Leistung und Geräuschentwicklung etwa zu sporadischem "sanftem" Pumpen selbst noch bei Wassermangel möglich.

Eine Zusatzschaltung 20 für die Ansteuerung der Feldwicklungen 19 über die Schaltstrecken 34 wird zweckmäßigerweise mit in das Motor-Gehäuse eingreifenden Hall-Sensoren als den Sensor-Kommutatoren 18 unmittelbar auf den Motor 11 adaptiert und ihrerseits im wesentlichen nur über die Standard-Schnittstellen aus der praktisch unverändert belassenen Betriebsschaltung 13 angesteuert. Die Anordnung der Schaltstrecken 34 - und von Umschaltern 21 für bifilare Feldwicklungen 19 - in der Zusatzschaltung 20 unmittelbar auf dem Stator des Motors 11 hat kurze Leitungsführungen für die oberwellenreichen hohen Schaltspannungen zur Folge und stellt deshalb eine nur noch sehr geringe Störbelastung der Controllersteuerung 14 für die Regelungsaufgaben in der entfernt gelegenen Betriebsschaltung 13 oder direkt auf der Zusatzschaltung 20 dar.

## Patentansprüche

1. Geschirrspüler-Pumpenantrieb mit einer Betriebsschaltung (13) ohne Drehzahlsteuerung für seinen Pumpenmotor (11), **dadurch gekennzeichnet, daß** als Pumpenmotor ein drehzahlgeregelter Gleichstrommotor (11) mit naß-gelagertem Permanentmagnet-Rotor (17) und auf dessen Momentanstellung ansprechendem Sensor-Kommutator (18) vorgesehen ist.

2. Pumpenantrieb nach dem vorangehenden Anspruch, **dadurch gekennzeichnet, daß** der Motor (11) mit wenigstens zwei winkelmäßig gegeneinander verschwenkten und zeitversetzt von einer veränderbaren Impulsfolge (23) zu durchflutenden Feldwicklungen (19) ausgestattet ist, die einerseits über einen gemeinsamen Sternpunkt (41) und eine UND-Bedingung sowie andererseits über je eine nacheinander vom Kommutator (18) durchgesteuerte Schaltstrecke (34) in einem Gleichstrom-Feldstromkreis (30) liegen.

3. Pumpenantrieb nach einem der vorangehenden Ansprüche, **dadurch gekennzeichnet, daß** der Feldstromkreis (30) über einen Strommeßwiderstand (25) als Sensor für das Betriebsverhalten des Motors (11) zum geerdeten Nulleiter (32) des Netzes (12) geführt ist.

4. Pumpenantrieb nach dem vorvorangehenden Anspruch, **dadurch gekennzeichnet, daß** die UND-Bedingung durch einen Serienschalter (38) zur Beeinflussung des Impulsverhältnisses im Feldstromkreis (30) gegeben ist, der aus einem in der Betriebsschaltung (13) oder in einer ihr nachgeschalteten Motor-Zusatzschaltung (20) enthaltenen, insoweit als Drehzahlregler arbeitenden Controller (14) getaktet ist.

5. Pumpenantrieb nach dem vorangehenden Anspruch, **dadurch gekennzeichnet, daß**, zur Kompensation von elektroakustischer Brummanregung des Motors (11) aufgrund schlecht geglätteter Motorgleichspannung für den Feldstromkreis (30), die Impulsbreite in umgekehrter Abhängigkeit von der Amplitude der Brummspannung am Ausgang eines auf der übergeordneten Betriebsschaltung (13) oder auf der motoreigenen Zusatzschaltung (20) enthaltenen Netzgleichrichters (15) moduliert ist .

6. Pumpenantrieb nach einem der vorangehenden Ansprüche, **dadurch gekennzeichnet, daß** den Schaltstrecken (34; 38) avalanchefeste Freilaufdioden (33) parallel geschaltet sind (Fig.1), insoweit diese Schaltstrecken (34) nicht selbst avalanchefest sind (Fig.4).

7. Pumpenantrieb nach dem vorvorletzten Anspruch, **dadurch gekennzeichnet, daß** der Controller (14) eine momentane Drehzahlabweichung des Motors (11) in einen Sollstrom-Wert (47) umsetzt, der neben einem Iststrom-Wert (46) für den Motorstrom im Feldstromkreis (30) auf einen hysteresebehafteten Komparator (44) geschaltet ist, aus dem der Serienschalter (38) getaktet wird.

8. Pumpenantrieb nach einem der vorangehenden Ansprüche, **dadurch gekennzeichnet, daß** der Kommutator (18) Sensorsignale (37) als Istdrehzahlinformation auch für drehzahlabhängige Steuerungseingriffe etwa bezüglich der aktuellen hydraulischen Pumpenleistung an den Controller (14) liefert.

9. Pumpenantrieb nach einem der vorangehenden Ansprüche, **dadurch gekennzeichnet, daß** der Pumpenmotor (11) wenigstens eine aus zwei gegensinnig in Serie geschalteten Teilwicklungen (29) bestehende Feldwicklung (19) aufweist, die einerseits mit ihrem Mittenabgriff (28) und andererseits über einen sensorgesteuerten Umschalter (21) zwischen beiden Teilwicklungen (29a - 29b) in den Erregerstromkreis (30) geschaltet ist.

10. Pumpenantrieb nach dem vorangehenden Anspruch, **dadurch gekennzeichnet, daß** die beiden Teilspulen (29a, 29b) einer Feldwicklung (19) als eine bifilare Wicklung (29-29) mit Mittenabgriff (28) erstellt sind.
